# EUROPEAN PATENT APPLICATION

(11) **EP 1 935 613 A1**
(43) Date of publication of application: **25.06.2008**
(21) Application number: 07121999.2
(22) Date of filing: 30.11.2007
(51) Int. Cl.: B29C 49/48, B65B 3/02, B65B 59/02, B65D 21/08, B65D 23/00, B67C 3/02

(54) **Method of filling containers, process for manufacturing a container and the manufactured container**

(30) Priority: 21.12.2006 EP 06126816
(71) Applicant: The Procter and Gamble Company, Cincinnati, Ohio 45202 (US)
(72) Inventor: Gerlach, Christian Gerhard Friedrich, 1060 Brussels (BE)
(74) Representative: Mather, Peter Geoffrey

(57) **Abstract**

The present invention further provides a method of filling a plurality of containers with a product on a filling line, the containers comprising three regions: a side-wall region; a deformable panel region; and a pivot region, and wherein the pivot region lies between the side-wall region and the deformable panel region, wherein at least two of the containers filled on the filling line have different first and second internal volumes, and wherein the filling line requires substantially no down-time to change from the first volume container to the second volume container.

## Description

The present invention relates to a method of filling a plurality of containers with a product on a filling line. The present invention also relates to a process for manufacturing a container in a mold cavity, the container comprising a side-wall, a concave deformable panel, and a pivot section.

### Background of the Invention

Manufacturers of consumer goods require the flexibility to run liquid filling packing lines at a range of fill volumes, for example +/- 20% volume about an average fill volume. The higher fill volumes are frequently needed for promotional runs where the consumer is offered, say, 20% extra product for the same sale price as the regular product. Such promotions represent only a proportion of the total packaged manufacturing volume, and are generally run for relatively short periods on any given packing line. Alternatively the consumer goods manufacturer may wish to offer somewhat different package sizes to different retail consumers in order to customise the products on offer to the consumer.

In commercial packaging operations it would be advantageous to use existing packing lines for a range of bottle sizes (i.e. different volumes) without the need for time-consuming change over procedures on the packing line each time a different size bottle is to be filled. Such change overs reduce packaging equipment productivity and they are expensive.

The simplest way to achieve this outcome would be to set up the packing line to run a bottle size / volume at the top end of the desired range and to underfill the bottle for reduced volumes. However a package which is, say, 20% or even 40% underfilled is perceived by consumers to be poor value for money because they purchase a bottle with a large, unfilled headspace. Furthermore a large, unfilled headspace may be prevented in certain circumstances by consumer protection legislation, or technical requirements, for example product stability.

The present invention provides a method of filling a plurality of containers, generally bottles, with a range of internal volumes without impacting the key dimensions of the container (height, width, depth) and key features of the container (neck, orientation, features, label features etc.) thereby avoiding change to the key external dimensions of the container. This enables containers having different internal volumes to be run of the same packing line without the need for any down-time caused by change over.

Bottles which are made by blow molding and which incorporate a concave bottom have been disclosed in the prior art.

US 3,843,005 issued on October 22^{nd} 1974, and US 4,036,926, issued on July 19th 1977, both describe methods for blow molding a container having a concave bottom. In both cases this is achieved by blowing the container in a blow mold having telescopically movable portions. The main objective of these patents is to provide a bottle with an inwardly convex base which is useful where the contents of the container are packaged under pressure, such as for carbonated drinks.

The present invention also provides a different process which avoids telescopically movable portions, and which provides a deformable panel which is inverted about a pivot section.

### Summary of the Invention

The present invention further provides a method of filling a plurality of containers with a product on a filling line, the containers comprising three regions: a side-wall region; a deformable panel region; and a pivot region, and wherein the pivot region lies between the side-wall region and the deformable panel region, wherein at least two of the containers filled on the filling line have different first and second internal volumes, and wherein the filling line requires substantially no down-time to change from the first volume container to the second volume container.

The present invention also provides a process for manufacturing a container in a mold cavity wherein the interior of the mold cavity comprises three regions: a side-wall region; a deformable panel region; and a pivot region, and wherein the pivot region lies between the side-wall region and the deformable panel region, the process comprising the steps of:
i) holding a heated parison in the mold cavity;
ii) expanding the parison under internal pressure to form a precursor, the precursor comprising a side-wall, a deformable panel and a pivot section in the corresponding regions of the mold cavity;
iii) inwardly deforming a moving section of the mold to invert the deformable panel about the pivot section so that the deformable panel lies within the region defined by the side-wall whilst substantially maintaining the internal pressure of the previous, precursor forming step;
iv) withdrawing the moving section of the mold from the inwardly deformed panel; and
v) ejecting the container from the mold cavity.

### Detailed Description of the Invention

The present invention relates to a method of filling a plurality of containers with a product on a filling line. Each container comprises a variable depression, the volume of which is readily variable during the blow-molding process in which the container is formed, so that containers made in the same mold cavity have a range of internal volume. Furthermore these containers can be run on the same packing line, with little or no adjustment to the packing line, irrespective of their internal volume. Preferably the containers are made by a blow-molding process, more preferably an injection stretch blow-molding process, which is adapted to provide a container with a deformable panel which is concave and lies within the region defined by the side-wall

A "mold" as described herein generally comprises two or more parts which can be closed to form a "mold cavity", and opened in order to allow a heated parison to be inserted into the mold and/or the finished container to be removed from the mold. In the present invention the interior of the mold cavity comprises three regions: a side-wall region; a deformable panel region; and a pivot region. The pivot region lies between the side-wall region and the deformable panel region. In commercial operations multiple mold cavities may be combined in a continuous, high-speed machine.

By "heated parison" what is meant herein is a molded form which is produced prior to expansion to form the finished object. A parison is necessarily somewhat smaller than the finished object. A specifically preferred parison is a preform generally produced by, for example injection molding, at an elevated temperature in excess of the melt temperature.

By "blow-molding" what is meant herein is a process in which a parison is first blown.

By "stretch blow-molding" what is meant herein is a process in which the preform is first stretched longitudinally followed by a blowing step. Typically the preform is stretched by means of a stretch pin or plunger which stretches the precursor to the bottom, or at least very close to the bottom, of the mold cavity. The blowing step is performed by increasing the internal pressure within the stretched preform, preferably at a temperature above the glass transition temperature, designed to result in retained orientation in the blow direction so that the resulting configuration is "biaxially oriented".

By "precursor" what is meant herein is the heated and blown parison, and in the case of stretch blow molding heated, stretched and blown parison, which has been thus formed within a mold cavity.

The blow-molding process of the present invention comprises the formation of a pre-cursor comprising a side-wall, a deformable panel and a pivot section in the corresponding regions of the mold cavity. An inwardly moving section of the mold then inverts the deformable panel about the pivot section so that the deformable panel lies within the region defined by the side-wall. As a result of this transformation the deformable panel takes up a concave configuration in respect of the outer dimensions of the container.

The distance through which the inwardly moving section is displaced can be quickly and easily adjusted at the mold and this enables convex deformable panels of different dimensions to be formed and, thereby, a range of bottles can be made in the same mold, the range of bottles having the same external dimensions but different internal volumes. Any of these bottles may be run on the same packaging line with little or no adjustment needed to the packaging line.

It has been found that the step of inverting the deformable section about the pivot section can be achieved without either reheating the deformable panel or cooling the side wall. Preferably the internal pressure reached during the formation of the precursor is maintained, or substantially maintained, to avoid any undesired deformation of the side walls at this stage in the process. By substantially maintaining the internal pressure it is meant here that the internal pressure at the start of the step of inverting the deformable section is at least 60%, preferably at least 70%, more preferably at least 80%, of the pressure reached during the formation of the precursor, and will be at least 10% at the end of the deformation step.

In a further step the completed container is then ejected from the mold.

The containers of the present invention are preferably thermoplastic bottles. Suitable thermoplastics include high density polyethylene, low density polyethylene, polyester, polystyrene and polypropylene.

Polypropylene is particular preferred because the process of the present invention produces biaxially oriented polypropylene containers which have desirable properties including a high degree of transparency and clarity. Polypropylene is readily available in commercial grades. Materials having suitable combinations of melt strength, re-heat properties, clarity and processing window size are available from suppliers such as Borealis, BP, and Total, e.g. Total's PPR7225. The appropriate stretch temperature for a polypropylene, for example, is between about 140°C and 150°C.

Alternatively, a preferred polyester is polyethylene terephthalate, PET. A suitable material is Equipolymer C93 having an intrinsic viscosity of 0.8 dL/g.

In the context of the present invention the finished container contains a concave region formed by the inversion of the deformable panel, the boundary of the concave region being formed by the pivot section. The concave region may provide aesthetic or functional features. The concave section may function as a handle or grip, or, in a preferred embodiment of the present invention, the area within the pivot section provides an inverted base of the container, sometimes referred to as a "champagne bottom".

In a preferred embodiment of the present invention the internal volume of the container is from 5% to 30%, preferably from 8% to 20%, less than the internal volume defined by the side-walls of the precursor.

In a still further preferred embodiment of the present invention the average weight per unit area of the inwardly deformed panel of the container is less than the average weight per unit area of the side-wall of the container.

## Claims

1. A method of filling a plurality of containers with a product on a filling line, the containers comprising three regions: a side-wall region; a deformable panel region; and a pivot region, and wherein the pivot region lies between the side-wall region and the deformable panel region, wherein at least two of the containers filled on the filling line have different first and second internal volumes, and wherein the filling line requires substantially no down-time to change from the first volume container to the second volume container.

2. A method according to claim 1 wherein the area within the pivot section provides the base of the container.

3. A method according to either of claims 1 or 2 wherein the internal volume of the container is from 5% to 30% less than the internal volume defined by the side-walls of the precursor.

4. A method according to claim 3 wherein the internal volume of the container is from 8% to 20% less than the internal volume defined by the side-walls of the precursor.

5. A method according to any of claims 1 to 4 wherein the average weight per unit area of the inwardly deformed panel of the container is less than the average weight per unit area of the side-wall of the container.

6. A process for manufacturing a container in a mold cavity wherein the interior of the mold cavity comprises three regions: a side-wall region; a deformable panel region; and a pivot region, and wherein the pivot region lies between the side-wall region and the deformable panel region, the process comprising the steps of:
i) holding a heated parison in the mold cavity;
ii) blowing the parison under internal pressure to form a precursor, the pre-cursor comprising a side-wall, a deformable panel and a pivot section in the corresponding regions of the mold cavity;
iii) inwardly deforming a moving section of the mold to invert the deformable panel about the pivot section so that the deformable panel lies within the region defined by the side-wall whilst substantially maintaining the internal pressure of the previous, precursor forming step;
iv) withdrawing the moving section of the mold from the inwardly deformed panel; and
v) ejecting the container from the mold cavity.

7. A container comprising a side-wall, a deformable panel and a pivot section wherein the deformable panel is concave and lies within the region defined by the side-wall, and wherein the internal volume of the container is from 5% to 30% less than the internal volume defined by the side-walls of the precursor.

8. A container according to claim 7 wherein the internal volume of the container is from 8% to 20% less than the internal volume defined by the side-walls of the precursor.

9. A container according to either of claims 7 or 8 wherein the average weight per unit area of the inwardly deformed panel of the container is less than the average weight per unit area of the side-wall of the container.
